# EUROPEAN PATENT SPECIFICATION

(11) **EP 2 608 063 B1**
(45) Date of publication and mention of the grant of the patent: **09.01.2019**
(21) Application number: 11817789.8
(22) Date of filing: 18.08.2011
(51) Int. Cl.: G06F 17/30

(54) **INSTANT COMMUNICATION TOOL AND METHOD FOR SAME TO ACCOMPLISH CONVENIENT SEARCH**
WERKZEUG FÜR SOFORTIGE KOMMUNIKATION UND VERFAHREN DAFÜR ZUR DURCHFÜHRUNG EINER KOMFORTABLEN SUCHE
INSTRUMENT DE COMMUNICATION INSTANTANÉE ET SON PROCÉDÉ DE RECHERCHE AISÉE

(30) Priority: 18.08.2010 CN 201010258918
(43) Date of publication of application: 26.06.2013
(73) Proprietor: Tencent Technology (Shenzhen) Company Limited, Shenzhen Guangdon 518044 (CN)
(72) Inventor: CHANG, Qing, Guangdong 518044 (CN); DOU, Feng, Guangdong 518044 (CN); XIE, Xin, Guangdong 518044 (CN)
(74) Representative: AWA Sweden AB
(86) International application number: PCT/CN2011/078556
(87) International publication number: WO 2012/022262

(56) References cited:
- CN-A- 1 723 458
- CN-A- 101 243 449
- US-A1- 2007 088 687
- US-A1- 2007 130 276
- US-A1- 2009 132 969

## Description

### Field of the Invention

The present invention relates to Internet technologies, and more particularly to an instant messenger and a method for performing convenient search by the instant messenger.

### Background of the Invention

Instant messengers can implement instant communication on Internet through a point-to-point technology, and even implement group chat among multiple buddies. Now, instant messengers have been accepted by most netizen, and become absolutely necessary communication tools of users.

At present, when a user chats through an instant messenger, some professional terms or new vocabularies talked by buddies may be unfamiliar for the user. At this time, the user must start a browser, open a commonly used searching website, and input a keyword to search for the professional terms or new vocabularies. The whole process is time-consuming and cumbersome, and it is required to switch between two windows of application layer. US 2007/130276 A1 allows participants in an electronic messaging conversation to retrieve information related to words and phrases in the electronic messaging conversation without leaving the electronic messaging environment. The electronic messaging environment allows a user to select text within the electronic messaging conversation and then initiate an operation to retrieve information related to the selected words.

### Summary of the Invention

In view of the above, embodiments of the present invention provide an instant messenger and a method for performing convenient search by the instant messenger, so as to implement convenient search.

The technical solution of the present invention is implemented as follows.

An instant messenger includes a search starting module, a text selecting module and a searching module, where
the search starting module is configured to receive a command of starting convenient searching function;
the message pump is configured to receive all mouse and keyboard messages of a current process of the instant messenger after the search starting module receives the command of starting convenient searching function, send a message used for a convenient searching process to the text selecting module, and return other messages to the current process of the instant messenger to be distributed, wherein the message used for the convenient searching process comprises a command of starting to select text and a command of terminating to select text;
the text selecting module is configured to monitor the command of starting to select text and the command of terminating to select text, and select text contents according to the command of starting to select text and the command of terminating to select text; and
the searching module is configured to monitor the command of terminating to select text, and start to search for the text contents after the text selecting module selects the text contents.

A method for performing convenient search by the instant messenger includes:
receiving, by the instant messenger, a command of starting convenient searching function;
starting a message pump, receiving all mouse and keyboard messages of a current process of the instant messenger, determining a message used for a convenient searching process from the all messages, and returning other messages to the current process to be distributed, wherein the message used for the convenient searching process comprises a command of starting to select text and a command of terminating to select text;
monitoring the command of starting to select text and the command of terminating to select text, selecting text contents according to the command of starting to select text and the command of terminating to select text; and
after receiving the command of terminating to select text, starting to search for the text contents.

As can be seen from the above technical solution, after receiving a command of starting convenient searching function, the instant messenger monitors a command of selecting text, and takes a command of terminating to select text as a command of starting to search for selected text contents. In this way, the instant messenger may instantly start to search for the text contents after selecting the text. Moreover, since the instant messenger monitors the command of selecting text, and instantly starts to search for the text contents after detecting the command of terminating to select text, it is not required to start a special searching tool, and also not required to switch between the window of instant messenger and windows of other searching tools, so as to implement convenient search and facilitate users.

### Brief Description of the Drawings

Figure 1 is a schematic diagram illustrating the structure of an instant messenger according to an embodiment of the present invention.
Figure 2 is a flowchart illustrating a method for performing convenient search by an instant messenger according to an embodiment of the present invention.

### Detailed Description of the Invention

Embodiments of the present invention provide an instant messenger and a method for performing convenient search by the instant messenger, so as to provide users with a chat assistant function of conveniently searching for professional terms or new vocabularies during a chat process. Through the embodiments of the present invention, an Instant Messaging (IM) user may perform search in an IM chat window through drag-selecting a keyword while chatting.

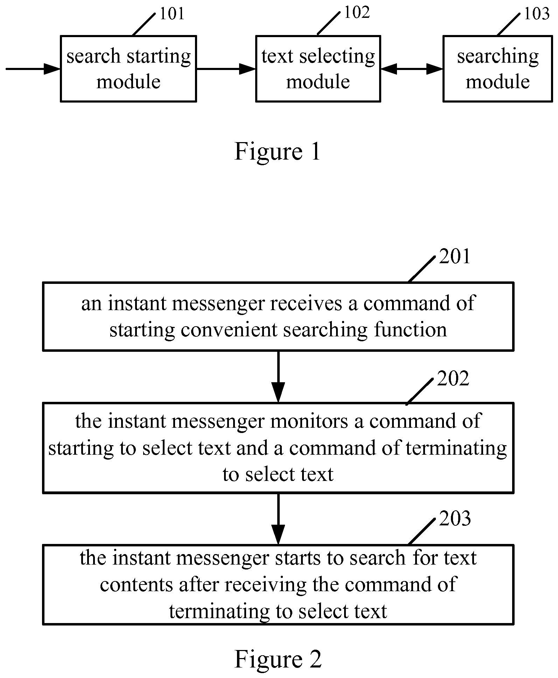

Figure 1 is a schematic diagram illustrating the structure of an instant messenger according to an embodiment of the present invention.

As shown in Figure 1, the instant messenger includes a search starting module 101, a text selecting module 102 and a searching module 103.

The search starting module 101 is configured to receive a command of starting convenient searching function.

The text selecting module 102 is configured to monitor a command of starting to select text and a command of terminating to select text, and select text contents according to the command of starting to select text and the command of terminating to select text.

The searching module 103 is configured to monitor the command of terminating to select text, and starting to search for the text contents when the text selecting module 102 selects the text contents.

The command of starting convenient searching function may be a triggering command of a specific hot key on a keyboard, or a triggering command of a specific button on the interface of the instant messenger.

Specifically, the text selecting module 102 monitors the command of starting to select text and the command of terminating to select text which are inputted in a text area of the instant messenger, where the text area includes a message displaying area and/or a message inputting area.

The searching module 103 starts to search for the text contents when the text selecting module 102 selects the text contents from the text area.

The text area of the instant messenger includes a message displaying area and/or a message inputting area. After the convenient searching function is started, the instant messenger may monitor whether an IM user selects the text contents from the text area; if the instant messenger detects the command of terminating to select text and the IM user selects the text contents from the text area, the instant messenger instantly starts to search for the text contents.

Typically, the command of starting to select text is an operation of pressing the left key of mouse, and the command of terminating to select text is an operation of releasing the left key of mouse. In other words, after pressing the left key of mouse, the IM user drag-selects the text contents in the text area until the left key of mouse is released. After detecting an operation of releasing the left key of mouse, the instant messenger takes the operation of releasing the left key of mouse as the command of starting search, and determines whether the text contents have been selected. If the text contents have been selected, the instant messenger instantly searches for the selected text contents.

The instant messenger determines, through mouse locating, control locating and interface invoking, whether the text contents have been selected. Specifically, after detecting an operation of releasing the left key of mouse, the instant messenger locates a window where the mouse is located, then locates a control of the text area according to a control tree of the window, where the text area includes a message displaying area and/or a message inputting area, and obtains, through an interface provided by the control of the text area, the text contents selected by the user. Through a high-light displaying mode, the text contents selected by the user may be differentiated from other text contents which are not selected by the user.

Of course other operation information may be predefined as the command of starting to select text and the command of terminating to select text. The embodiment of the present invention does not limit the form of the command of starting to select text and the command of terminating to select text. For example, a specific keyboard operation or a specific audio command may be taken as the command of starting to select text or the command of terminating to select text.

The embodiment of the present invention may further extend the searching module 103, so as to drag or copy text contents in other programs or windows besides the current process of the instant messenger to the searching module 103, and the searching module 103 instantly starts to search the text contents after receiving the text contents.

Specifically, after receiving the text contents, the searching module 103 generates a Universal Resource Locator (URL) in which the text contents are filled as a keyword, and performs search according to the generated URL. From the respective of user, the searching process may be started as long as the user drags the text contents to the searching module 103. As long as the keyword and the URL format of a searching engine are learned, the URL meeting the requirements of the searching engine may be generated according to the URL format and the keyword. In the embodiment of the present invention, the searching module 103 is configured to generate the URL and send the URL to the searching engine, and the searching engine performs search.

In a conventional method for performing search in a browser, a keyword inputted by the user is processed based on webpage script, and then a processing result is provided to a searching engine server at the background so as to be used for search. The interaction capability provided by the webpage script is limited, and after the keyword inputted by the user is received, it is needed to further monitor a command of starting search. For example, an operation of pressing an enter key or an operation of clicking a specific button is taken as the command of starting search. From the respective of user, after the user inputs the keyword into a searching box, it is needed to press the enter key or click a specific key to start search. Obviously, compared with the conventional method for performing search in a browser, the method provided by the embodiment of the present invention is easier. For example, after a convenient searching function is started in the instant messenger, a searching module may be displayed on the right sidebar of the instant messenger, and then text contents in other programs such as a Word document is dragged to the searching module. The searching module may instantly start to search the text contents without monitoring the command of starting search. From the respective of user, after the user drags the text contents to the searching module, the searching module instantly starts to search for the text contents without needing other commands such as clicking the enter key after receiving the text contents.

In order to make the convenient searching function of the instant messenger be performed or quitted successfully, the instant messenger provided by the embodiment of the present invention further includes a message pump and a quitting module.

In a default case, mouse and keyboard messages of Windows operation system are only distributed to an input focus window. In order to ensure that a drag-selecting process is not influenced by an operation of changing the window which has input focus currently such as an operation of switching the user's window, it is needed to intercept all messages of current process in the whole drag-selecting process, to ensure that the drag-selecting operation is performed successfully and the drag-selecting process is quitted normally.

In the embodiment of the present invention, the message pump is adopted to intercept messages, so as to ensure that the searching module for implementing the convenient searching function in the instant messenger is not influenced by the operation of changing the window which has input focus currently such as the operation of switching the user's window. The message pump can obtain messages belonging to the convenient searching process, so as to ensure that the convenient searching process is performed successfully.

Specifically, the message pump is configured to receive all messages of current process of the instant messenger after the search starting module 101 receives a starting command, send messages used for the convenient searching process to the text selecting module 102 or the quitting module, return other messages to the current process to be distributed continuously, receive a quitting indication and close the message pump.

The text selecting module 102 is configured to receive the command of starting to select text and the command of terminating to select text which are sent by the message pump, receive a quitting indication and close the text selecting module 102.

The searching module 103 is configured to receive a quitting indication and close the searching module 103.

The quitting module is configured to receive a message of quitting the convenient searching process sent by the message pump, and send the quitting indication to the message pump, the text selecting module 102 and the searching module 103.

The message of quitting the convenient searching process includes: a message of closing the current chat window, a message of quitting the operation system, a message of pressing the ESC key, a triggering message of the right key of mouse and a triggering message of an executable control.

Figure 2 is a flowchart illustrating a method for performing convenient search by an instant messenger according to an embodiment of the present invention.

As shown in Figure 2, the method includes following processes.

Block 201, an instant messenger receives a command of starting convenient searching function.

Block 202, the instant messenger monitors a command of starting to select text and a command of terminating to select text.

Block 203, the instant messenger starts to search for text contents after receiving the command of terminating to select text.

The process of monitoring the command of starting to select text and the command of terminating to select text includes: starting a message pump
specially used for convenient search, receiving all messages of current process of the instant messenger, determining messages used for the convenient searching process, performing convenient search according to the messages used for the convenient searching process, and returning other messages to the current process so as to be distributed continuously.

The messages used for the convenient searching process include the command of starting to select text, the command of terminating to select text and the message of quitting the convenient searching process.

The message of quitting the convenient searching process includes: a message of closing the current chat window, a message of quitting the operation system, a message of pressing the ESC key, a triggering message of the right key of mouse and/or a triggering message of an executable control. When a message extracted from the messages intercepted by the message pump is the triggering message of the left key of mouse, if the triggering location of the left key of mouse is not in a text area and an executable control is triggered by the left key of mouse, the convenient searching process is quitted.

The process of starting to search the text contents includes:
generating a URL in which the text contents are filled as a keyword, sending the generated URL to a searching engine, and the searching engine performing search according to the URL.

The method for performing convenient search by the instant messenger is illustrated schematically with reference to a specific embodiment, and the embodiment includes following processes.
Process 1: a drag-selecting state is started. The user starts the drag-selecting state through a button or a hot key during a chat process; at this time, the pattern of mouse is changed to a searching state, to prompt the user that the current state is the drag-selecting state.
Process 2: a drag-selecting operation is performed. The user may drag-select a keyword in a message displaying area or a message inputting area in the chat window so as to perform search, where the drag-selecting state starts at the time of receiving a triggering operation of pressing the left key of mouse and terminates at the time of receiving a triggering operation of releasing the left key of mouse. Corresponding text in the text area is highlighted according to the drag-selecting operation of user.
Process 3: a searching result is displayed. When the user terminates the drag-selecting operation through releasing the left key of mouse and has selected a segment of characters, the searching result is displayed on the right sidebar of the chat window.

In order to facilitate the user to perform convenient search, the searching module of the instant messenger may be further extended. Specifically, the searching module takes the received text contents as the command of starting search, and instantly starts to search for the text contents after receiving the text contents. That is to say, after the searching result is displayed on the right sidebar of the chat window, the user may drag to-be-searched text contents in any other window (e.g., a Word text document or webpage) to the searching module on the right sidebar through a dragging operation, so as to utilize the right sidebar of the chat window to the largest degree to facilitate the searching operation of the user.

Hereinafter, technical features for ensuring that the convenient searching method of instant messenger is implemented successfully will be illustrated in detail.

Since much logic conflict will be caused if more than one drag-selecting state is started at the same time, in the embodiment of the present invention, only one drag-selecting state exists in the current process at the same time. Specifically, the problem of starting multiple drag-selecting states may be avoided through reentering preventing protection.

The instant messenger monitors a close event of the current chat window, and closes the module for performing convenient search after detecting the close event. Since the convenient searching state relates to the current chat window, it is needed to quit the convenient searching state when the chat window is closed, and thus the instant messenger needs to monitor the close event of the current chat window.

After the instant messenger starts the convenient searching function, the normal pattern of mouse is changed into a predefined searching pattern. That is to say, in order to make the user learn that the current chat window is in the convenient searching state, the pattern of mouse needs to be changed. Specifically, the pattern of mouse may be changed through a specific API interface into a searching pattern specially used in the drag-selecting state.

In order to assist the user to perform the drag-selecting operation, the instant messenger may depict a floating tooltip on the right-bottom corner of mouse to follow the movement of mouse, and brief description of the drag-selecting operation is displayed on the floating tooltip.

Through starting the message pump, the instant messenger monitors all mouse and keyboard messages of the current process no matter whether the current operation focus is on the module for performing convenient search, and thus the switch of the operation focus between windows will not result in that the convenient searching process can not be performed.

After the drag-selecting state terminates, i.e., after the instant messenger detects the command of terminating to select text, the instant messenger may close the floating tooltip, and change the pattern of mouse into a normal pattern.

After detecting the command of terminating to select text, the instant messenger extracts the text contents selected by the user, copies the text contents to the searching module on the right sidebar, and after receiving the text contents, the searching module performs search by taking the text contents as a keyword.

When the instant messenger detects the command of terminating to select text, if the instant messenger has not started the searching module, the instant messenger starts the searching module; if the searching module has been started, the instant messenger sends the text contents selected by the user to the searching module to be searched for.

The message pump mentioned in the embodiment of the present invention is one of important modules. In the convenient searching state, the message pump filters each system message, and returns messages unrelated to the convenient searching function to a primary thread message pump to be distributed. Messages related to the convenient searching function are first processed by a special message pump, and then are determined whether to be returned to the current process. Generally, messages quitting from the convenient searching state may not be returned to the current process, and other messages related to the convenient searching function need to be returned to the current process.

The foregoing is only preferred embodiments of the present invention and is not used to limit the protection scope of the present invention. Any modification, equivalent substitution and improvement without departing from the principle of the present invention are within the protection scope of the present invention.

## Claims

1. An instant messenger, comprising a search starting module, a message pump, a text selecting module and a searching module, wherein
the search starting module is configured to receive a command of starting convenient searching function (101); the message pump is configured to receive all mouse and keyboard messages of a current process of the instant messenger after the search starting module receives the command of starting convenient searching function, send a message used for a convenient searching process to the text selecting module, and return other messages to the current process of the instant messenger to be distributed, wherein the message used for the convenient searching process comprises a command of starting to select text and a command of terminating to select text;
the text selecting module is configured to monitor the command of starting to select text and the command of terminating to select text, and select text contents according to the command of starting to select text and the command of terminating to select text (102); and
the searching module is configured to monitor the command of terminating to select text, and start to search for the text contents after the text selecting module selects the text contents (103).

2. The instant messenger of claim 1, wherein the text selecting module is configured to monitor the command of starting to select text and the command of terminating to select text which are inputted in a text area of the instant messenger, wherein the text area comprises at least one of a message displaying area and a message inputting area.

3. The instant messenger of claim 2, wherein the command of starting to select text is an operation of pressing the left key of mouse, and the command of terminating to select text is an operation of releasing the left key of mouse.

4. The instant messenger of claim 3, wherein the text selecting module is configured to monitor the operation of the left key of mouse, locate a window where the mouse is located, locate a control of the text area according to a control tree of the window, and obtain the selected text contents through an interface provided by the control of the text area.

5. The instant messenger of claim 1, wherein the searching module is configured to receive the text contents in other process or window besides the current process of the instant messenger, and after receiving the text contents, instantly start to search for the text contents.

6. The instant messenger of claim 1 or 5, wherein the searching module generates a Universal Resource Locator, URL, in which the text contents are filled as a keyword, and send the generated URL to a searching engine, wherein the searching engine performs search according to the URL.

7. The instant messenger of claim 1, further comprising a quitting module, wherein
the quitting module is configured to receive a message of quitting the convenient searching process which is sent by the message pump, and send the quitting indication to the message pump, the text selecting module and the searching module.

8. The instant messenger of claim 7, wherein the message of quitting the convenient searching process comprises at least one of a message of closing a current chat window, a message of quitting an operation system, a message of pressing an ESC key, a message of clicking the right key of mouse and a message of clicking an executable control.

9. A method for performing convenient search by an instant messenger, comprising:
receiving, by the instant messenger, a command of starting convenient searching function (201); the method further comprises:
starting a message pump, receiving all mouse and keyboard messages of a current process of the instant messenger, determining a message used for a convenient searching process from the all messages, and returning other messages to the current process to be distributed, wherein the message used for the convenient searching process comprises a command of starting to select text and a command of terminating to select text;
monitoring the command of starting to select text and the command of terminating to select text, selecting text contents according to the command of starting to select text and the command of terminating to select text (202); and after receiving the command of terminating to select text, starting to search for the text contents (203).

10. The method of claim 9, wherein the message used for the convenient searching process comprises the command of starting to select text, the command of terminating to select text and a message of quitting the convenient searching process.

11. The method of claim 10, wherein the message of quitting the convenient searching process comprises at least one of a message of closing a current chat window, a message of quitting an operation system, a message of pressing an ESC key, a message of clicking the right key of mouse and a message of clicking an executable control.

12. The method of claim 9, further comprising:
receiving text contents in other process or window besides the current process of the instant messenger, and after receiving the text contents, starting to search for the text contents.

13. The method of claim 9 or 12, wherein starting to search for the text contents comprises:
generating a Universal Resource Locator, URL, in which the text contents are filled as a keyword, and sending the generated URL to a searching engine, wherein the searching engine performs search according to the URL.

## Patentansprüche

1. Sofortnachrichtendienst, ein Suchestartmodul, eine Ereignisschleife, ein Textauswahlmodul und ein Suchmodul umfassend, wobei:
das Suchestartmodul dafür konfiguriert ist, einen Befehl zum Starten einer komfortablen Suchfunktion zu empfangen (101),
die Ereignisschleife dafür konfiguriert ist, alle Maus- und Tastaturnachrichten eines aktuellen Prozesses des Sofortnachrichtendienstes zu empfangen, nachdem das Suchestartmodul den Befehl zum Starten einer komfortablen Suchfunktion empfangen hat, eine Nachricht an das Textauswahlmodul zu senden, die für einen komfortablen Suchprozess verwendet wird, und andere Nachrichten zum Verteilen an den aktuellen Prozess des Sofortnachrichtendienstes zurückzugeben,
wobei die Nachricht, die für den komfortablen Suchprozess verwendet wird, einen Befehl zum Starten einer Textauswahl und einen Befehl zum Abschließen einer Textauswahl umfasst,
das Textauswahlmodul dafür konfiguriert ist, den Befehl zum Starten einer Textauswahl und den Befehl zum Abschließen einer Textauswahl zu überwachen und gemäß dem Befehl zum Starten einer Textauswahl und dem Befehl zum Abschließen einer Textauswahl Textinhalte auszuwählen (102), und
das Suchmodul dafür konfiguriert ist, dem Befehl zum Abschließen einer Textauswahl zu überwachen und die Suche nach Textinhalten zu starten, nachdem das Textauswahlmodul die Textinhalte ausgewählt hat (103).

2. Sofortnachrichtendienst nach Anspruch 1, wobei das Textauswahlmodul dafür konfiguriert ist, den Befehl zum Starten einer Textauswahl und den Befehl zum Abschließen einer Textauswahl zu überwachen, die in einen Textbereich des Sofortnachrichtendienstes eingegeben werden, wobei der Textbereich einen Nachrichtenanzeigebereich und/oder einen Nachrichteneingabebereich umfasst.

3. Sofortnachrichtendienst nach Anspruch 2, wobei der Befehl zum Starten einer Textauswahl eine Operation des Drückens der linken Maustaste ist und der Befehl zum Abschließen einer Textauswahl eine Operation des Loslassens der linken Maustaste ist.

4. Sofortnachrichtendienst nach Anspruch 3, wobei das Textauswahlmodul dafür konfiguriert ist, den Betrieb der linken Maustaste zu überwachen, ein Fenster zu lokalisieren, in dem sich die Maus befindet, eine Steuerung des Textbereichs gemäß einem Steuerverzeichnisbaums des Fensters zu lokalisieren und die ausgewählten Textinhalte durch eine Schnittstelle zu erlangen, die durch die Steuerung des Textbereichs bereitgestellt ist.

5. Sofortnachrichtendienst nach Anspruch 1, wobei das Suchmodul dafür konfiguriert ist, Textinhalte neben dem aktuellen Prozess des Sofortnachrichtendienstes in einem anderen Prozess oder Fenster zu empfangen und nach dem Empfang der Textinhalte sofort mit der Suche nach den Textinhalten zu starten.

6. Sofortnachrichtendienst nach Anspruch 1 oder 5, wobei das Suchmodul eine URL (Universal Resource Locator) erzeugt, in die Textinhalte als ein Schlüsselwort eingegeben sind, und die erzeugte URL an eine Suchmaschine sendet, wobei die Suchmaschine eine Suche gemäß der URL ausführt.

7. Sofortnachrichtendienst nach Anspruch 1, ferner ein Beendigungsmodul umfassend, wobei das Beendigungsmodul dafür konfiguriert ist, eine Nachricht zum Beenden des komfortablen Suchprozesses zu empfangen, die durch die Ereignisschleife gesendet wird, und die Beendigungsanzeige an die Ereignisschleife, das Textauswahlmodul und das Suchmodul zu senden.

8. Sofortnachrichtendienst nach Anspruch 7, wobei die Nachricht zum Beenden des komfortablen Suchprozesses mindestens eines des Folgenden umfasst: eine Nachricht zum Schließen eines aktuellen Chat-Fensters, eine Nachricht zum Beenden eines Betriebssystems, eine Nachricht des Drückens einer ESC-Taste, eine Nachricht des Klickens der rechten Maustaste und eine Nachricht des Anklickens eines ausführbaren Steuerungselements.

9. Verfahren zum Ausführen einer komfortablen Suche durch einen Sofortnachrichtendienst, Folgendes umfassend:
Empfangen eines Befehls zum Starten einer komfortablen Suchfunktion durch den Sofortnachrichtendienst (201),
wobei das Verfahren ferner Folgendes umfasst:
Starten einer Ereignisschleife, Empfangen aller Maus- und Tastaturnachrichten eines aktuellen Prozesses des Sofortnachrichtendienstes, Bestimmen einer Nachricht, die für einen komfortablen Suchprozess verwendet wird, aus allen Nachrichten und Zurückgeben anderer Nachrichten an den aktuellen Prozess zum Verteilen, wobei die Nachricht, die für den komfortablen Suchprozess verwendet wird, einen Befehl zum Starten einer Textauswahl und einen Befehl zum Abschließen einer Textauswahl umfasst,
Überwachen des Befehls zum Starten einer Textauswahl und des Befehls zum Abschließen einer Textauswahl, Auswählen von Textinhalten gemäß dem Befehl zum Starten einer Textauswahl und dem Befehl zum Abschließen einer Textauswahl (202) und
nach dem Empfangen des Befehls zum Abschließen einer Textauswahl Starten der Suche nach den Textinhalten (203).

10. Verfahren nach Anspruch 9, wobei die Nachricht, die für den komfortablen Suchprozess verwendet wird, den Befehl zum Starten einer Textauswahl, den Befehl zum Abschließen einer Textauswahl und eine Nachricht zum Beenden des komfortablen Suchprozesses umfasst.

11. Verfahren nach Anspruch 10, wobei die Nachricht zum Beenden des komfortablen Suchprozesses mindestens eines des Folgenden umfasst: eine Nachricht zum Schließen eines aktuellen Chat-Fensters, eine Nachricht des Beendens eines Betriebssystems, eine Nachricht zum Drücken der ESC-Taste, eine Nachricht des Klickens der rechten Maustaste und eine Nachricht des Anklickens eines ausführbaren Steuerungselements.

12. Verfahren nach Anspruch 9, ferner Folgendes umfassend:
Empfangen von Textinhalten in anderen Prozessen oder Fenstern neben dem aktuellen Prozess der Sofortnachrichtendienstes und nach dem Empfangen der Textinhalte Starten der Suche nach den Textinhalten.

13. Verfahren nach Anspruch 9 oder 12, wobei das Starten der Suche nach Textinhalten Folgendes umfasst:
Erzeugen einer URL (Universal Resource Locator), in die Textinhalte als ein Schlüsselwort eingegeben sind, und Senden der erzeugten URL an eine Suchmaschine, wobei die Suchmaschine eine Suche gemäß der URL ausführt.

## Revendications

1. Messagerie instantanée comprenant un module de lancement de recherche, une pompe à messages, un module de sélection de texte, et un module de recherche, dans laquelle
le module de lancement de recherche est configuré pour recevoir une instruction de lancement d'une fonction de recherche pratique (101) ; la pompe à messages est configurée pour recevoir tous les messages de souris et clavier d'un processus actuel de la messagerie instantanée après la réception, par le module de lancement de recherche, de l'instruction de lancement de fonction de recherche pratique, envoyer un message utilisé pour un processus de recherche pratique au module de sélection de texte, et renvoyer d'autres messages au processus actuel de la messagerie instantanée pour être distribués, dans laquelle le message utilisé pour le processus de recherche pratique comprend une instruction de lancement de sélection de texte et une instruction d'achèvement de sélection de texte ;
le module de sélection de texte est configuré pour surveiller l'instruction de lancement de sélection de texte et l'instruction d'achèvement de sélection de texte, et sélectionner des contenus de texte selon l'instruction de lancement de sélection de texte et l'instruction d'achèvement de sélection de texte (102) ; et
le module de recherche est configuré pour surveiller l'instruction d'achèvement de sélection de texte et pour commencer à rechercher les contenus de texte après la sélection, par le module de sélection de texte, des contenus de texte (103).

2. Messagerie instantanée selon la revendication 1, dans laquelle le module de sélection de texte est configuré pour surveiller l'instruction de lancement de sélection de texte et l'instruction d'achèvement de sélection de texte qui sont entrées dans une zone de texte de la messagerie instantanée, dans laquelle la zone de texte comprend au moins l'une parmi une zone d'affichage de message et une zone d'entrée de message.

3. Messagerie instantanée selon la revendication 2, dans laquelle l'instruction de lancement de sélection de texte est une opération consistant à appuyer sur le bouton gauche d'une souris, et l'instruction d'achèvement de sélection de texte est une opération de libération du bouton gauche de souris.

4. Messagerie instantanée selon la revendication 3, dans laquelle le module de sélection de texte est configuré pour surveiller l'opération du bouton gauche de souris, localiser une fenêtre où la souris se situe, localiser une commande de la zone de texte en fonction d'une arborescence de commande de la fenêtre, et obtenir les contenus de texte sélectionnés via une interface fournie par la commande de la zone de texte.

5. Messagerie instantanée selon la revendication 1, dans laquelle le module de recherche est configuré pour recevoir les contenus de texte dans un autre processus, ou une autre fenêtre, mis à part le processus actuel de la messagerie instantanée, et après la réception des contenus de texte, pour commencer instantanément à rechercher les contenus de texte.

6. Messagerie instantanée selon la revendication 1 ou 5, dans laquelle le module de recherche génère un localisateur de ressources universel, URL, où les contenus de texte sont remplis en tant qu'un mot clé, et envoie l'URL généré à un moteur de recherche, dans laquelle le moteur de recherche effectue une recherche selon l'URL.

7. Messagerie instantanée selon la revendication 1, comprenant en outre un module d'abandon, dans laquelle le module d'abandon est configuré pour recevoir un message d'abandon du processus de recherche pratique qui est envoyé par la pompe à messages, et envoyer l'indication d'abandon à la pompe à messages, au module de sélection de texte, et au module de recherche.

8. Messagerie instantanée selon la revendication 7, dans laquelle le message d'abandon du processus de recherche pratique comprend au moins l'un parmi un message de fermeture d'une fenêtre de chat actuelle, un message d'abandon d'un système d'exploitation, un message d'enfoncement d'une touche ESC, un message de clic sur le bouton droit de souris, et un message de clic sur une commande exécutable.

9. Procédé pour réaliser une recherche pratique par une messagerie instantanée, comprenant :
la réception, par la messagerie instantanée, d'une instruction de lancement d'une fonction de recherche pratique (201) ;
le procédé comprenant en outre :
le lancement d'une pompe à messages recevant tous les messages de souris et clavier d'un processus actuel de la messagerie instantanée,
la détermination d'un message utilisé pour un processus de recherche pratique d'entre tous les messages, et le renvoi d'autres messages au processus actuel pour être distribués, dans lequel le message utilisé pour le processus de recherche pratique comprend une instruction de lancement de sélection de texte et une instruction d'achèvement de sélection de texte ;
la surveillance de l'instruction de lancement de sélection de texte et l'instruction d'achèvement de sélection de texte, la sélection des contenus de texte en fonction de l'instruction de lancement de sélection de texte et de l'instruction d'achèvement de sélection de texte (202) ;
et après la réception de l'instruction d'achèvement de sélection de texte, le lancement de la recherche des contenus de texte (203).

10. Procédé selon la revendication 9, dans lequel le message utilisé pour le processus de recherche pratique comprend l'instruction de lancement de sélection de texte, l'instruction d'achèvement de sélection de texte, et un message d'abandon du processus de recherche pratique.

11. Procédé selon la revendication 10, dans lequel le message d'abandon de processus de recherche pratique comprend au moins l'un parmi un message de fermeture de fenêtre de chat actuelle, un message d'abandon de système d'exploitation, un message d'enfoncement d'une touche ESC, un message de clic sur le bouton droit de souris, et un message de clic sur une commande exécutable.

12. Procédé selon la revendication 9, comprenant en outre :
la réception de contenus de texte dans un autre processus, ou une autre fenêtre, mis à part le processus actuel de la messagerie instantanée, et après la réception des contenus de texte, le lancement de la recherche des contenus de texte.

13. Procédé selon la revendication 9 ou 12, dans lequel le lancement de la recherche de contenus de texte comprend :
la génération d'un localisateur de ressources universel, URL, où les contenus de texte sont remplis en tant qu'un mot clé, et l'envoi de l'URL généré à un moteur de recherche, dans lequel le moteur de recherche effectue une recherche selon l'URL.
